# EUROPÄISCHE PATENTSCHRIFT

(11) **EP 1 142 851 B1**
(45) Veröffentlichungstag und Bekanntmachung des Hinweises auf die Patenterteilung: **04.01.2006**
(21) Anmeldenummer: 01105145.5
(22) Anmeldetag: 02.03.2001
(51) Int. Cl.: C04B 41/53, E04B 1/80

(54) **Verfahren zur Herstellung von Dämmplatten**
Method for producing insulation panels
Procédé de fabrication de panneaux isolants

(30) Priorität: 09.03.2000 DE 10011391; 26.04.2000 DE 10020333
(43) Veröffentlichungstag der Anmeldung: 10.10.2001
(73) Patentinhaber: Deutsche Rockwool Mineralwoll GmbH & Co. OHG, 45966 Gladbeck (DE)
(72) Erfinder: Klose, Gerd-Rüdiger, Dr., 46286 Dorsten (DE)
(74) Vertreter: Wanischeck-Bergmann, Axel

(56) Entgegenhaltungen:
- WO-A-95/33105

## Beschreibung

Die Erfindung betrifft ein Verfahren zur Herstellung von Dämmplatten, insbesondere Lamellenplatten, aus Mineralfasern, vorzugsweise aus Steinwolle, bei dem eine silikatische Schmelze in einer Zerfaserungseinrichtung zerfasert wird, anschließend die Mineralfasern gegebenenfalls unter Hinzufügung eines Binde-und/oder Imprägnierungsmittels, auf einer Fördereinrichtung als Mineralfaserbahn abgelegt werden, die Mineralfaserbahn sodann formgebend bearbeitet und schließlich einem Härteofen zugeführt wird, bevor die Mineralfaserbahn in einzelne Dämmplatten aufgeteilt wird, wobei in einem weiteren Arbeitsschritt lose und/oder schwach gebundene und/oder in ihrer Lage gestörte Mineralfasern von zumindest einer großen Oberfläche der Mineralfaserbahn und/oder der Dämmplatten entfernt werden.

Zur Herstellung von Dämmplatten sind Verfahren vorgesehen, bei denen in einem Ofen eine silikatische Schmelze aus silikatischern Material, beispielsweise Gläsern, natürlichen oder künstlichen Steinen hergestellt wird. Die Schmelze wird einem Zerfaserungsgerät zugeführt, das vor oder in einer Sammelkammer angeordnet ist. Mit diesem Zerfaserungsgerät wird die Schmelze in mikrofeine Fasern zerfasert, die anschließend in der Sammelkammer mit Binde- und/oder Imprägnierungsmitteln benetzt werden, bevor die derart benetzten Mineralfasern auf einer Fördereinrichtung, in der Regel einem Förderband zu einer Mineralfaserbahn aufgesammelt werden. Diese Mineralfaserbahn wird sodann formgebend bearbeitet, das heißt beispielsweise an ihren Rändern beschnitten, gefaltet und/oder komprimiert. Nachdem die gewünschte Formgebung der Mineralfaserbahn erzielt ist, wird die Mineralfaserbahn einem Härteofen zugeführt, in dem das Bindemittel ausgehärtet und die Mineralfaserbahn in ihrer Form fixiert wird. Nach dem Härteofen kann die Mineralfaserbahn beispielweise aufgewickelt oder in einzelne Dämmplatten aufgeteilt werden.

Derartige Dämmplatten werden beispielsweise für die Dämmung von Gebäudefassaden verwendet. Insbesondere kommen derartige Dämmplatten bei sogenannten Wärmedämm-Verbundsystemen zum Einsatz, bei denen die Dämmplatten, insbesondere als Lamellenplatten ausgebildete Dämmplatten auf die Gebäudefassade mittels eines Bauklebers, in der Regel eines Klebemörtels aufgeklebt werden. Um die Verarbeitung derartiger Dämmplatten auf der Außenfassade eines Gebäudes zu vereinfachen beziehungsweise kostengünstiger zu gestalten ist es aus dem Stand der Technik bekannt, die Dämmplatten werksseitig mit einer Vorbeschichtung aus einem Klebemörtel oder einer Kunststoffdispersion auszubilden. Derartige Dämmplatten sind beispielsweise aus der EP 0 719 365 B1 bekannt. Diese Vorbeschichtung soll die Haftfähigkeit der Dämmplatten an dem auf die Dämmplatten beziehungsweise die Fassade aufgetragenen Klebemörtel verbessern. Gleichzeitig kann eine derartige Beschichtung auch eine Verbesserung der Haftwirkung eines abschließend aufgetragenen Putzsystems verbessern.

Eine weitere Beschichtung einer Fassaden- oder Dachdeckplatte aus Mineralfasern ist beispielsweise aus der DE 32 48 663 C1 bekannt. Die aus dieser Druckschrift vorbekannte Beschichtung basiert auf Kieselsol und dringt als wässrig aufgebrachte Beschichtungsmasse zur Bildung einer Imprägnierungsschicht zumindest weit überwiegend in die oberflächennahen Bereiche der Dämmplatte aus Mineralfasern ein und bildet dabei eine geschlossene Schicht. Die Beschichtungsmasse wird in einer gewünschten Konsistenz unter erheblichem Druck in die Oberfläche der Mineralfaserplatte eingedrückt. In den oberflächennahen Bereichen der Mineralfaserplatte werden hierdurch gebrochene Mineralfasern erzeugt.

Weiterhin ist aus der EP 0 590 098 B1 ein Mineralwolle-Formkörper zur Wärme- und Schalldämmung von Gebäudeaußenwänden bekannt, der zur Befestigung an der Gebäudeaußenwand einerseits und als Putzträger für die Aufnahme eines Außenputzes andererseits bestimmt ist und welcher eine Rohdichte von etwa 100 kg/m³ bis 150 kg/m³ und eine offene Porösität von etwa 87 Volumen-% bis 96 Volumen-% aufweist, wobei ein mikrofeiner, mit Wasser aufbereiteter Zement mit einer mittleren Korngröße von etwa 2 µm bis 3 µm, die kleiner als die mittlere Porengröße zwischen den Mineralfasern ist und mit einem geringen Anteil von weniger als 0,5 Masse-% an Tensiden in mindestens eine Formkörper-Oberflächenschicht eingebracht ist.

Der letztgenannte Mineralwolle-Formkörper ist insbesondere für die Verwendung in Wärmedämm-Verbundsystemen geeignet.

Wärmdämm-Verbundsysteme bestehen demzufolge aus Dämmschichten, die auf die tragenden Wände oder Decken von Gebäuden aufgeklebt und mit Putzschichten gegen Witterungseinflüsse und mechanische Belastungen geschützt sowie optisch gestaltet werden. Die Verklebung der Dämmplatten erfolgt sowohl vollflächig als auch teilflächig. Die teilflächige Verklebung ist wegen des geringen Materialeinsatzes die wirtschaftlichste Applikationsmethode. Der hierzu verwendete und übliche Klebemörtel wird maschinell zum Verarbeitungsort gefördert und in Form von Wülsten und Batzen (punktförmig) auf die tragenden Flächen aufgebracht. Anschließend werden die Dämmplatten üblicherweise im Kreuzverband auf die Wand bzw. die Decke aufgeklebt.

Der auf die aufgeklebten Dämmplatten aufzutragende Putz besteht in der Regel aus einem Grund- und einem Deckputz. Der Grundputz ist zumeist identisch mit dem Klebemörtel. Bei dünnschichtigen Systemen von ca. 3 bis 4 mm wird der Grundputz aus den auf den einzelnen Gerüstlagen befindlichen Behältnissen entnommen und mit einer Traufel auf die Dämmplatten aufgetragen. Bei dickschichtigen Mineralputz-Systemen kann die Masse wie der Klebemörtel maschinell gefördert und raupenweise aufgetragen werden.

In den Grundputz wird in der Regel ein alkaliresistent beschichtetes Glasfaser-Gittergewebe eingebettet. Das Gittergewebe soll hierbei mittig in der Grundputzschicht angeordnet oder zumindest vollständig in diese eingebettet sein. Der anschließend aufgebrachte Deckputz dient dem Schutz des Grundputzes und ermöglicht die Herstellung der gewünschten optischen Wirkung.

Wärmedämm-Verbundsysteme werden auf die Lastfälle Windsog und Eigenlast ausgelegt. Die Standsicherheit eines Wärmedämm-Verbundsystems hängt in hohem Maße von der Querzugfestigkeit der Dämmplatten und den Haftfestigkeiten in den Grenzflächen zwischen den Dämmplatten und dem Klebemörtel und den Dämmplatten und dem Grundputz ab. Die innere Festigkeit der verwendeten Klebemörtel und Putzschichten sind im allgemeinen wesentlich höher, als die inneren Festigkeiten der verwendeten Dämmplatten aus Mineralfasern. Dies gilt auch für den Verbund zwischen dem Klebemörtel und der tragenden Fläche des Gebäudes.

Bei hohen Windsogbelastungen und hohen Eigenlasten oder geringen Querzugfestigkeiten der Dämmplatten werden die Dämmplatten daher ergänzend durch Dämmstoffhalter gesichert. Derartige Dämmstoffhalter bestehen in der Regel aus einem Teller und einem Schaft mit angeformtem Dübel. Die Teller können unterschiedliche Größen aufweisen. Der Dübel wird durch eine Schraube gespreizt, die als Kragarm in die Berechnung des statischen Systems eingeht. Die Anzahl der Dämmstoffhalter ist unter anderem auch von der Position innerhalb des Wärmedämm-Verbundsystems abhängig.

Bei den Dämmplatten aus Mineralfasern werden die Dämmplatten nach dem Verlauf der Mineralfasern relativ zu den großen Oberflächen der Dämmplatten unterschieden. Zum einen sind Dämmplatten bekannt und für die Verwendung bei Wärmedämm-Verbundsystemen geeignet, die einen Faserverlauf im wesentlichen parallel zu ihren großen Oberflächen aufweisen. Diese Dämmplatten werden durch Aufsammeln von mit ca.3,5 bis 8,5 Masse-% eines duroplastisch aushärtenden Harzgemisches, sowie ca. 0,2 bis 0,4 Masse-% Öl- bzw. adäquaten Mengen von Öl-in-Wasser-Emulsionen imprägnierten Mineralfasern auf einem kontinuierlich laufenden Band hergestellt. Durch eine entsprechende Stauchung der Fasern in Produktions-Längsrichtung und in vertikaler Richtung werden die Fasern verfaltet und in eine mehr oder weniger steile Lagerung zu den großen Oberflächen gebracht. Als Folge dieser Lagerung steigen die erreichbaren Druckspannungen und die Querzugfestigkeit der Dämmplatte aber auch die Wärmeleitfähigkeit an. Da als Folge der Vertikal-Kompression ein nicht unerheblicher Teil der Fasern parallel zu den großen Oberflächen orientiert ist, bestimmen diese Grenzflächen letzten Endes die maximale und die die Standsicherheit des Wärmedämm-Verbundsystems bestimmende Querzugfestigkeit. Obwohl derartige Dämmplatten Rohdichten von ca. 130 bis 180 kg/m³ aufweisen, liegen die Querzugfestigkeiten zumeist sehr deutlich unterhalb von ca. 30 kPa. Derartige Dämmplatten erfordern einen relativ hohen Materialeinsatz, der zwar das Schalldämmvermögen des Wärmedämm-Verbundsystems erhöht, aber insgesamt zu keiner wirtschaftlich optimalen Lösung führt.

Bei einer alternativen Ausgestaltung der Dämmplatten ist vorgesehen, dass die Fasern im wesentlichen rechtwinklig zu den großen Oberflächen verlaufen. Es handelt sich hierbei um sogenannte Lamellenplatten, die eine kostengünstige Alternative zu den voranstehend beschriebenen Dämmplatten mit einem parallel zu den großen Oberflächen verlaufenden Faserverlauf haben.

Die Lamellenplatten werden in der Weise hergestellt, dass Dämmplatten mit flachgelagerten Fasern durch Vertikalschnitte in Scheiben geschnitten werden.

Die Dicke der Scheiben entspricht der gewünschten Dämmdicke. Bei diesen Scheiben stehen nunmehr die Einzelfasern überwiegend senkrecht zu den großen Oberflächen, das heißt den Flächen, die bei der Verarbeitung mit Klebemörtel und/oder der Putzschicht beaufschlagt werden.
Durch die Orientierung der Mineralfasern steigen die erreichbaren Querzugfestigkeiten und Druckspannungen deutlich an. Da nur ein bestimmtes Festigkeitsniveau bei Wärmedämm-Verbundsystemen erforderlich ist, können die Rohdichten der Lamellenplatten auf ca. 75 bis 105 kg/m³ reduziert werden.

Lamellenplatten werden üblicherweise aus einem Vormaterial hergestellt, das aus maximal 200 mm dicken Platten besteht, wobei die weiteren Abmessungen des Vormaterials von der Breite der Produktionslinie und den Dimensionen der nachgeschalteten Verarbeitungsanlage abhängig sind. Eine weitgehend verlustfreie Fertigung ist beispielsweise möglich, wenn die das Vormaterial darstellenden Platten quer zur Produktionsrichtung entnommen werden und diese selbst entsprechend der künftigen Länge der Lamellenplatten von der auf der Produktionslinie endlos hergestellten Mineralfaserbahn abgelängt werden. Die großen Oberflächen der Lamellenplatten sind deshalb parallel zu der ursprünglichen Produktionsrichtung orientiert.

Die Breite der Lamellenplatten ist mit der Höhe des Vormaterials identisch. Da die Länge der von den Vormaterialplatten abgetrennten Abschnitte quasi beliebig gewählt werden kann, ist die Dämmdicke in weiten Grenzen variabel. Sie wird nach oben allerdings durch die mit zunehmender Dämmdicke steigende Scherbeanspruchung begrenzt. Dem Markt werden die Lamellenplatten zur Zeit mit den Abmessungen 0,1 bis 1,2 m Länge mal 0,2 m Breite angeboten.

Lamellenplatten können auch als großformatige Platten hergestellt werden. So ist beispielsweise eine Verfahrensweise bekannt, bei der die endlose Mineralfaserbahn vor dem Härteofen in einzelne Abschnitte zerlegt wird, die um 90 ° gedreht und durch eine entsprechende Stauchung sowie unter Ausnutzung der vorhandenen Klebfähigkeit der noch nicht aushärtenden Harzanteile wieder zu einer endlosen Mineralfaserbahn zusammengefügt werden. Da im Härteofen eine 5 bis 10 %-ige Stauchung in vertikaler Richtung erfolgt, werden die Mineralfasern im Bereich der Oberflächen dieser Mineralfaserbahn umgelenkt und horizontal orientiert. Diese Grenzzonen bestimmen, wie bereits oben dargelegt, letztlich die Eigen-Querzugfestigkeit der Dämmplatten. Um hier möglichst hohe Werte zu erhalten, müssen deshalb die flachlagernden Mineralfasern entfernt werden.

Eine alternative Vorgehensweise bei der Herstellung von Lamellenplatten besteht darin, dass ein möglichst dünnes, als Primärvlies bezeichnetes Mineralfaservlies durch eine auf- und abwärts gerichtete Pendelbewegung zu einer endlosen Mineralfaserbahn geformt wird, deren endgültige Struktur durch die Aushärtung des Bindemittels in einem Härteofen fixiert wird. In den Schlingen des Primärvlieses liegen die Mineralfasern in flachen Winkeln zu den großen Oberflächen. Diese flach gelagerten Mineralfasern müssen wieder bis in die Bereiche der steil gelagerten Mineralfasern entfernt werden, um hohe Querzugfestigkeiten zu erreichen.

Für die Verwendung bei Wärmedämm-Verbundsystemen haben sich daher Lamellenplatten als vorteilhaft erwiesen, die als kleinformatige Abschnitte von den Vormaterialplatten hergestellt wurden. Das Ablängen der Lamellenplatten erfolgt wegen der hohen Arbeitsgeschwindigkeit und der längeren Standzeiten zumeist mit Sägen. Messerbänder oder Messerscheiben werden wegen der schnellen Abnutzung und der niedrigen Arbeitsgeschwindigkeit nicht oder nur selten eingesetzt. Oberflächenschichten lassen sich beispielsweise auch präzise mit Schleifbändern oder Fräsen abtragen. Daher können die Trennflächen grundsätzlich in Schnitt- und Schleifflächen unterschieden werden.

Die voranstehend beschriebenen Verfahren zur Herstellung von Lamellenplatten führen jedoch im Hinblick auf die spätere Verwendung in einem Wärmedämm-Verbundsystem grundsätzlich zu den gleichen Problemen in der Oberflächenbeschaffenheit der Lamellenplatten. Diese Lamellenplatten weisen nämlich den Mangel auf, dass die Oberflächen hohe Anteile angeschnittener und im Verband gelockerter oder bereits herausgelöster Mineralfasern enthalten. Zusätzlich dringt noch ein Teil der beim Trennen und/oder Abschleifen zerkleinerten Mineralfasern mechanisch in die Oberfläche der Lamellenplatten ein. Durch den nachfolgenden Transport und/oder das Stapeln der Lamellenplatten werden zudem die oberflächennahen Mineralfasern in die Oberflächen der Lamellenplatten gedrückt und somit parallel zu den Oberflächen orientiert. Derartige gelöste Fasern verringem die Haftung zwischen dem Klebemörtel und den Dämmplatten einerseits und dem Putzsystem und den Dämmplatten andererseits. Um die losen Mineralfaserbestandteile zu entfernen schlägt die EP 0 719 365 B1 beispielsweise vor, dass die Schnittflächen vor dem Auftrag der dünnen Schicht des Klebemörtels staubfrei geblasen werden.

Weiterhin enthalten alle Dämmstoffe aus Mineralfasern mehr oder weniger große Mengen an Mineralfasern, die während ihrer Herstellung überhaupt nicht mit Bindemitteln in Kontakt gekommen sind. Diese Mineralfasern lagern sich aufgrund ihrer Flugeigenschaften in zumeist dünnen Schichten auf dem ursprünglichen Primärvlies ab und werden bei den nachfolgenden Stauchungen mit verfaltet. Die hierdurch gebildeten Mineralfaserlagen verhindern eine Querverbindung der etwa 1 bis 3 mm dünnen, in sich festen Mineralfaserlaminate. Die bindemittelfreien Mineralfasern sind deutlich an der fehlenden Färbung zu erkennen. Sie fallen bei einem Betasten der Oberfläche des Dämmstoffs durch die fehlende innere Festigkeit auf. Der Anteil an nicht tragenden Mineralfasern liegt üblicherweise zwischen 20 und 30 %. Bei ungünstigen Herstellungsbedingungen kann dieser Anteil bis auf 40 % ansteigen. Derartige Mineralfaserprodukte müssen dann aber bereits als unbrauchbar eingestuft werden.

Weiterhin ist festzustellen, dass die silikatische Schmelze in der Regel nicht vollständig in Mineralfasern umgewandelt werden kann. Bei Dämmstoffen aus Steinwolle befinden sich ca. 20 bis 30 Masse-% nichtfaseriger Bestandteile mit Durchmessern von weniger als 0,060 mm in der Mineralfasermasse, die ohne weitere Bindung eingebettet sind. Festigkeitsvermindernd wirken sich auch zugesetzte Mineralfasern aus Recyclingprozessen aus. Die Zurückführung derartiger Recyclingfasern, die beispielsweise als Abfälle bei der Konfektionierung von Lamellenplatten oder aus mangelhaften Produktionslosen anfallen, erfolgt in der Weise, dass derartige Dämmstoffe mitsamt den ausgehärteten Bindemitteln zerschlagen oder zerrieben werden. Die Oberflächen der in die Sammelkammer zurückgeblasenen Mineralfaserflocken wirken hierbei wie Feinstfilter, so dass bei diesem Recyclingverfahren eine nachträgliche Durchimprägnierung nicht möglich ist. Die Mineralfasern aus Recyclingmaterial liegen daher in Form von wenigen Millimeter großen Flocken vor, die ohne innere Festigkeit sind. Der Anteil in den Mineralfaserbahnen kann hierbei zwischen 3 und 20 Masse-% liegen.

Aus den voranstehenden Ausführungen ergibt sich, dass Lamellenplatten relativ inhomogene Körper sind, deren innere Bindungskräfte sehr unterschiedlich hoch ausgebildet sein können.

Insgesamt sind die Oberflächen von Dämmplatten aus Mineralfasern hydrophob. Sie werden durch die üblichen auf der Basis von hydraulischen Bindemitteln hergestellten Klebemörtel und Putze trotz der diesen zugesetzten oberflächenaktiven Benetzungs- und Porosierungsmitteln nur in einer sehr dünnen Oberflächenschicht benetzt. Hinzu kommt, dass der Wasseranteil in diesen Materialien niedrig gehalten wird, um hohe innere Festigkeiten zu erzielen. Bei der Verarbeitung derartiger Klebemörtel und Putze bei hohen Außentemperaturen und unter Windeinfluss härten die Bindemittel schnell aus, was den Verbund weiter schwächt bzw. die Bindung nicht zustande kommen lässt.

Der Verbund der nassen Kleber- und Putzschichten ist zunächst so schwach, dass die Kleber- und Putzschichten ohne weiteres wieder von den Dämmplatten abgehoben werden können, wobei die Oberfläche der Kleber- und Putzschichten von einem Mineralfaserpelz besetzt ist, der deutlich anzeigt, dass die Kleber- und Putzschichten nicht in der Fasermasse der Dämmplatten verankert ist. Diese fehlende Verankerung kommt dadurch zustande, dass die Kleber-und Putzschichten nicht in die Dämmplatten eindringen konnten. Bei der Verarbeitung derartiger Dämmplatten in Verbindung mit Kleber- und Putzschichten werden nämlich die Recyclingbestandteile und die bindemittelfreien Mineralfasern derart komprimiert, dass sie die Poren in den Dämmplatten zusetzen und jedes weitere Eindringen der Kleber- und Putzmaterialien und insbesondere der nicht benetzbaren Flüssigkeiten verhindern. In die durch die Kompression entstehenden Vertiefungen wird naturgemäß mehr Kleber- und/oder Putzmaterial eingedrückt. Bei ausreichender Rückstellkraft drücken die rückfedernden Eigenschaften der Mineralfasern die noch nicht erhärteten Bestandteile der Kleber- und Putzschichten zurück. Nach dem Aushärten beispielsweise der Putzschichten zeigen sich zahlreiche kleine Erhebungen, die anschließend zwecks Egalisierung der Oberfläche abgedeckt werden müssen. Hieraus resultiert ein Mehraufwand an Material und Arbeitszeit.

Der voranstehend beschriebene geringe Haftverbund ist aber nach dem Aushärten der Kleber- und Putzschichten immer noch deutlich höher beanspruchbar, als beispielsweise der oberflächennahe Verbund der Mineralfasern innerhalb der Dämmplatten. Hier kann es bei Zugbeanspruchungen zu einem sogenannten Fellabriss kommen, bei dem die Mineralfasern in einem Bereich von 5 bis 10 mm aus der Oberfläche beziehungsweise dem Verbund aus Dämmplatten und Kleber- und/oder Putzschichten herausgezogen werden können. Die hierbei erzielbaren Querzugfestigkeiten liegen bis zu 70 % unter den bei gleicher Struktur der Dämmstoffplatten erreichbaren Maximalfestigkeiten. Es kommt hinzu, dass die als Bindemittel verwendeten Penol-Harnstoff-Formaldehyd-Harzgemische ausgesprochen empfindlich auf Alkalien und auf Feuchte reagieren. Diese Reaktion führt zu einer weiteren Abminderung der Querzugfestigkeit des Wärmedämm-Verbundsystems. Diese Querzugfestigkeit reduziert sich als Folge der zeitabhängigen Veränderungen während der Nutzungszeit derart, dass die Standsicherheit eines Wärmedämm-Verbundsystems bereits während der Nutzungszeit gefährdet sein kann oder aber zumindest als beeinträchtigt betrachtet werden muß.

Um die voranstehend beschriebenen Nachteile bei der Herstellung von Dämmplatten, insbesondere Lamellenplatten für Wärmedämm-Verbund-systeme zu vermeiden, sind verschiedene Vorgehensweisen zur Entfernung von Grobstaub, Mineralfaserflocken oder dergleichen durchgeführt worden. Diese Vorgehensweisen beschränken sich aber insbesondere auf Absaugeinrichtungen, die im Bereich der Säge- und sonstigen Trenneinrichtungen vorgesehen sind, um den dort anfallenden Staub abzusaugen. Neben dem Abblasen der zu beschichtenden Oberflächen gemäß der EP 0 719 365 B1 ist darüber hinaus versucht worden, die Oberflächen der Dämmplatten mit Borsten aus verschiedenen Materialien, mit verschiedenen Formen und unterschiedlichen Bewegungsspielen abzubürsten, um das nicht tragfähige Fasermaterial aus den Oberflächenbereichen zunächst selektiv zu lösen, herauszuziehen und anschließend abzusaugen. Diese Vorgehensweise hat aber nicht zum erwünschten Ziel geführt, da die Dispersion der Inhomogenitäten zu groß war, so dass die Borsten nicht selektiv arbeiten konnten, sondern nahezu die gesamte Oberfläche erfassten und dabei auch die Struktur der festen Bereiche der Dämmplatten schädigten oder gar zerstörten.

Eine mechanische Aufbereitung der Oberflächen von Dämmplatten führte daher nicht zu dem erwünschten Ziel, so dass als Alternative das Aufbringen von haftvermittelnden Schichten oder Imprägnierungen gewählt wurde, um eine hohe Querzugfestigkeit des Wärmedämm-Verbundsystems zu erreichen. Eine hierbei übliche Beschichtung besteht beispielsweise aus einem Gemisch von leicht aufzumahlenden Zuschlägen, wie Kreide, Marmormehl, Quarz im Korngrößenbereich um 10 bis 60 µm, die mit Wasserglas und Kunststoff-Dispersionen gebunden sind. Aufgrund der Partikelgröße konnten diese Beschichtungen aber trotz der in den Kunststoff-Dispersionen enthaltenen oberflächenaktiven, das heißt benetzenden Substanzen nicht in die Dämmplatten eindringen. Vielmehr verblieben diese Beschichtungen auf der Oberfläche, so dass eine wesentliche Verbesserung der Querzugfestigkeit derartiger Dämmplatten in Wärmedämm-Verbundsystemen nicht erzielt wurde. Das Einbringen von feinkörnigeren Zuschlägen erforderte zudem eine größere Menge an Bindemitteln, um die notwendige innere Festigkeit in den Dämmplatten zu erzielen. Verzichtet man auf diese größere Menge Bindemittel, so kreiden die oberflächig angelagerten Schichten leicht aus und bewirken durch ihre Trennwirkung das Gegenteil der beabsichtigten Wirkung. Eine wesentliche Verbesserung des Haftverbundes zwischen den Dämmplatten und der Beschichtung konnte also nicht erzielt werden.

Bei Lamellenplatten ist es darüber hinaus bekannt, Kieselsol in Verbindung mit Kunststoff-Dispersionen mit Hilfe von schäumenden Substanzen auf die Oberfläche der Lamellenplatte zu applizieren. Diese Beschichtung bleibt aber gewissermaßen als Tröpfchen auf bzw. an den Enden der senkrecht stehenden Mineralfasern hängen. Allenfalls die schwach gebundenen, horizontal angeordneten Mineralfasern werden bei dieser Vorgehensweise stärker erfasst. Aus Kostengründen werden die Beschichtungsmengen sehr gering gehalten, so dass sich keine zusammenhängend festen Schichten bilden können. Bei einer Belastung der Dämmplatten durch den Handwerker beim Andrücken der Dämmplatten an die Wand bzw. bei der Aufgabe des Klebemörtels mit dem nachfolgenden Andrücken der Dämmplatten mit der flachen Hand wird darüber hinaus der innere Verband dieser Beschichtung vollends aufgelöst. Es kann dann eine krümelige Masse sehr leicht von der inhomogenen Faserfläche abgerieben werden.

Ausgehend von diesem Stand der Technik liegt der Erfindung die **Aufgabe** zugrunde, ein gattungsgemäßes Verfahren derart weiterzuentwickeln, dass eine insbesondere gattungsgemäße Beschichtung in einfacher Weise und unter Ausbildung einer hohen Haftkraft auf die Oberfläche von Dämmplatten aufgetragen werden kann, um diese Dämmplatten, insbesondere Lamellenplatten bevorzugt in Wärmedämm-Verbundsystemen einsetzen zu können, bei denen die Oberflächen der Dämmplatten mit Klebemörtel und/oder Putzschichten in Kontakt gebracht werden, wobei diese Beschichtungen zusammen mit den Dämmplatten einen innigen Verbund eingehen sollen.

Die **Lösung** dieser Aufgabenstellung sieht bei dem erfindungsgemäßen Verfahren vor, dass zumindest eine große Oberfläche, vorzugsweise die mit einer Beschichtung zu beschichtende große Oberfläche der Mineralfaserbahn mit einem unter einem steilen bis rechten Winkel verlaufenden Luft-, Dampf- und/oder Wasserstrahl beaufschlagt wird, der im oberflächennahen Bereich der Mineralfaserbahn angeordnete lose und/oder schwach gebundene und/oder in ihrer Lage gestörte Mineralfasern in relativ zur großen Oberfläche tiefer gelegene Bereiche der Mineralfaserbahn fördert.

Bei dem erfindungsgemäßen Verfahren ist somit vorgesehen, dass die Oberfläche der Mineralfaserbahn, insbesondere der Lamellenplatten mit einem unter einem steilen bis rechten Winkel verlaufenden Luft-, Dampf- und/oder Wasserstrahl angeblasen bzw. angespritzt wird bzw. werden. Die Düsendurchmesser liegen vorzugsweise unter ca. 1,2 mm. Durch die Beauflagung der Oberfläche mit Luft-, Dampf- und/oder Wasser werden die nicht gebundenen Fasern ca. 10 bis maximal 20 mm tief in die Mineralfaserbahn bzw. die Lamellenplatten gedrückt. Die zwischen oder in den Laminaten befindlichen Mineralfasern werden bei dieser Behandlungsmethodik in einem Bereich von 0,5 bis ca. 5 mm tief in die Struktur der Mineralfaserbahn bzw. der Lamellenplatten eingepreßt. Im Endergebnis ragen dann nur noch die von losen Mineralfasern befreiten, tragenden Strukturen der Mineralfaserbahn bzw. der Lamellenplatten heraus, die dann mit der Beschichtung einen kraftschlüssigen Verbund eingehen können und somit eine verbesserte Haftwirkung zwischen der Beschichtung und der Mineralfaserbahn bzw. den Lamellenplatten ermöglichen.

Vorzugsweise wird die Oberfläche impulsartig mit dem Luft-, Dampf- und/oder Wasserstrahl beaufschlagt. Eine Verbesserung der Wirkung dieses Verfahrens wird dadurch erzielt, dass dem Luft-, Dampf- und/oder Wasserstrahl fein bis feinstkörnige Zuschläge, insbesondere Glasperlen, Sand oder dergleichen zugefügt werden. Hierdurch wird die Effektivität der gewünschten Oberflächengestaltung verbessert.

Eine weitere Verbesserung der effektiven Oberflächengestaltung wird dadurch erzielt, dass die Mineralfaserbahn mit mehreren Luft-, Dampf- und/oder Wasserstrahlen zeilenartig beaufschlagt wird, so dass eine gleichmäßige Oberflächengestaltung möglich ist.

Weiterhin ist vorgesehen, dass die Mineralfaserbahn alternierend mit Luft- und Wasserstrahlen beaufschlagt wird. Durch diesen Verfahrensschritt erfolgt eine Verdichtung der Oberfläche bzw. der oberflächennahen Bereiche. Weiterhin wird hierdurch sichergestellt, dass die in die Oberflächen hineingedrückten Wassermengen auf eine Tiefe von ca. 5 mm begrenzt bzw. diese niedrig gehalten sind. Ergänzend kann hierbei vorgesehen sein, dass in die Mineralfaserbahn durch die Dampf- und/oder Wasserstrahlen eingebrachtes Wasser zumindest teilweise entfernt, insbesondere abgesaugt wird, um eine zu große Durchfeuchtung der Mineralfaserbahn zu vermeiden.

Die bei diesem erfindungsgemäßen Verfahren angewendeten Drücke, Düsendurchmesser, Massen und Mengen der festen Zusätze, somit die Intensität der verfahrensmäßigen Behandlung ist so zu wählen, dass die Struktur der tragenden Laminate, somit der miteinander über Bindemittel verbundenen Mineralfasern nicht geschädigt wird.

Nach einem weiteren Merkmal der Erfindung ist es vorgesehen, dass die Oberfläche der Mineralfaserbhan bzw. der Lamellenplatten anschließend mit einer Deckschicht beschichtet wird, die vorzugsweise aus einem Gemisch aus insbesondere fein gemahlenen Mineralfasern und Bindemittel besteht. Diese Deckschicht isr druckabsorbierend und biegeweich.

Vorzugsweise wird die Deckschicht in die Oberfläche eingepreßt und dabei insbesondere verdichtet. Unterstützt werden kann das Aufbringen der Deckschicht durch einen Unterdruck auf der gegenüberliegenden Oberfläche der Mineralfaserbahn bzw. der Lamellenplatte.

Nach einem weiteren Merkmal der Erfindung ist vorgesehen, dass die Deckschicht einer thermischen Behandlung zu ihrer Aushärtung auf der Oberfläche unterzogen wird. Als vorteilhaft hat sich hierbei eine thermische Behandlung der Deckschicht mittels hochfrequenter Energiestrahlung erwiesen.

Als imprägnierende Mittel kommen Lösungen oder Quasi-Lösungen wie Kolloide, insbesondere aber als Nanoteilchen dispergierte Stoffe, Emulsionen oder hochdispergierte Kunststoff-Dispersionen zum Einsatz, die den hohen inneren Filterwiderstand der Mineralfasermasse ohne weiteres überwinden. Als Beispiele für geeignete anorganischen Verbindungen können Natron- oder Kaliwasserglas jeweils allein oder in Mischungen miteinander sowie unter Zusatz von Kunststoff-Dispersionen, Kieselsol, Ormocere beispielsweise mit Zusätzen von Alkoholen, Mono-Aluminumphosphat- und Phosphorsäure-Lösungen genannt werden.

Die Durchfeuchtung der oberflächennahen Zonen der Mineralfaserbahn bzw. der Lamellenplatten ermöglicht ein deutlich leichteres Eindringen der Imprägnierungen. Zusätze von oberflächenaktiven Substanzen verbessern die Effektivität, sie machen aber auch eine nachfolgende Erhitzung auf über 140 bis 150° C erforderlich, um die Tenside wieder abzubauen. Werden die oberflächenaktiven Substanzen nicht unwirksam gemacht, können sie im späteren Gebrauch zu einer zumindest lokalen Durchfeuchtung des Dämmstoffs führen. Daher sollte die Tiefe der imprägnierenden Schicht auf ca. 1 bis 5 mm begrenzt werden.

Hinsichtlich der erfindungsgemäßen Verfahren hat es sich als vorteilhaft erwiesen, die Mineralfaserbahn mittels Hochdruckwasserstrahlen mit einem Druck von vorzugsweise 120 bis 250 bar in einzelne Abschnitte zu schneiden, die anschließend eine Lamelle einer Lamellenplatte oder eine Lamellenplatte bilden. Bei Anwendung dieser Trennmethode werden alle im oberflächennahen Bereich vorhandenen losen und schwach gebundenen Mineralfasern oder nicht faserigen Bestandteile entfernt. Eine Staubbildung ist nicht zu beobachten. Daher wird bereits durch diesen Verfahrensschritt, der den voranstehend beschriebenen Verfahren vorgeschaltet sein kann, eine Oberflächenstruktur geschaffen, die die Anwendung der voranstehend beschriebenen Verfahren wesentlich vereinfacht, da ein geringerer Anteil von losen bzw. schwach gebundenen Fasern bzw. nicht faserigen Bestandteilen entfernt werden muß.

Hinsichtlich der Beschichtung für eine Mineralfaserbahn, insbesondere für Lamellenplatten, die im Anschluß an ein Entfernen von losen und/oder schwach gebundenen und/oder in ihrer Lage gestörten Mineralfasern von zumindest einer großen Oberfläche der Mineralfaserbahn und/oder der Lamellenplatten nach dem voranstehend beschriebenen Verfahren auf die große Oberfläche auftragbar ist, ist vorgesehen, dass die Beschichtung druckabsorbierend und biegeweich ist und eine Affinität für Putze, Klebemörtel und Kunststoff-Dispersionen oder dergleichen aufweist. Diese Beschichtung erleichtert die Verarbeitung derartiger Mineralfaserprodukte und stellt insbesondere eine verbesserte Haftung der Klebemörtel bzw. der Putzsysteme auf den Mineralfaserprodukten sicher.

Weiterhin ist vorgesehen, dass die Beschichtung aus mit Mineralfasern imprägnierenden Bestandteilen, wie Kolloide, als Nanoteilchen dispergierte Stoffe, Emulsionen oder hochdispergierte Kunststoff-Dispersionen besteht. Vorzugsweise sind als Bestandteile der Beschichtung anorganische Verbindungen, wie Natron- oder Kaliwasserglas allein oder in Mischungen mit oder ohne Zusatz von Kunststoff-Dispersionen, Kieselsol, Ormocere, mit oder ohne Alkoholzusatz, Mono-Aluminiumphosphat- und/oder Phosphorsäure-Lösungen vorgesehen.

Ergänzend kann die Beschichtung oberflächenaktive Substanzen, beispielsweise Tenside aufweisen.

In besonderer Weise hat sich eine Deckschicht als vorteilhaft erwiesen, die aus einem Gemisch aus Mineralfasern und Bindemitteln besteht. Beispielsweise eignet sich eine Zubereitung von feingemahlenen Mineralfasern der selben Provenienz, wie sie in der Mineralfaserbahn bzw. in den Lamellenplatten vorliegen, die mit Wasserglas, Ormoceren, Monoaluminiumphosphat-Phosphorsäure-CaO-Gemischen, gegebenenfalls modifiziert durch Kunststoff-Dispersionen, Verdickungsmitteln usw. vermengt werden. Diese Deckschicht wird auf der Oberfläche der Mineralfaserbahn bzw. der Lamellenplatten verteilt. Da sie aufgrund ihrer Sprödigkeit nicht abstreichfähig ist, bzw. die Oberfläche der Mineralfaserbahn bzw. der Lamellenplatten dabei regelmäßig aufgerauht wird, müssen die Massen mit schmalen leistenförmigen Werkzeugen ähnlich den sogenannten Tampern bei dem Einbau von bituminösen Straßenbaubelägen in die Oberfläche der Mineralfaserbahn bzw. der Lamellenplatten gepreßt und dabei verdichtet werden.

Die derart ausgebildete Beschichtung ist gut luftdurchlässig, so dass unterstützend während der Verdichtung ein leichter Unterdruck an die Dämmstoffbahn bzw. die Lamellenplatten angelegt werden kann, um die überschüssige Bindemittellösung in die Imprägnierzone der Mineralfaserbahn bzw. der Lamellenplatten zu saugen.

Vorzugsweise können der Deckschicht Stapelfasern aus alkaliresistent beschichteten Textil-Glasfasern, Natur- und Kunststoff-Fasern beigefügt werden.

Abstreiffähige Beschichtungen werden dadurch erhalten, dass dem Gemisch aus Mineralfasern und Bindemitteln feinkörnige Zuschläge mit Korngrößen ≤ 10 µm beigefügt werden. Hierzu sind beispielsweise mikrofein gemahlene Zemente und sonstige feste Zuschläge geeignet. Selbstverständlich besteht auch die Möglichkeit, die Beschichtung aus einem handelsüblichen Klebemörtel, einem Putz, einem Kunstharzputz oder dergleichen auszubilden, so dass die Dämmplatte bereits werkseitig für die Verarbeitung auf der Baustelle vorbereitet ist.

## Patentansprüche

1. Verfahren zur Herstellung von Dämmplatten, insbesondere Lamellenplatten, aus Mineralfasern, vorzugsweise aus Steinwolle, bei dem eine silikatische Schmelze in einer Zerfaserungseinrichtung zerfasert wird, anschließend die Mineralfasern, gegebenenfalls unter Hinzufügung eines Binde- und/oder Imprägnierungsmittels, auf einer Fördereinrichtung als Mineralfaserbahn abgelegt werden, die Mineralfaserbahn sodann formgebend bearbeitet und schließlich einem Härteofen zugeführt wird, bevor die Mineralfaserbahn in einzelne Dämmplatten aufgeteilt wird, wobei in einem weiteren Arbeitsschritt lose Mineralfasern von zumindest einer großen Oberfläche der Mineralfaserbahn und/oder der Dämmplatten entfernt werden,
**dadurch gekennzeichnet,**
**dass** zumindest eine große Oberfläche, vorzugsweise die mit einer Beschichtung zu beschichtende große Oberfläche der Mineralfaserbahn mit einem unter einem steilen bis rechten Winkel verlaufenden Luft-, Dampf-und/oder Wasserstrahl beaufschlagt wird, der im oberflächennahen Bereich der Mineralfaserbahn angeordnete lose und/oder schwach gebundene und/oder in ihrer Lage gestörte Mineralfasern in relativ zur großen Oberfläche tiefer gelegene Bereiche der Mineralfaserbahn fördert.

2. Verfahren nach Anspruch 1,
**dadurch gekennzeichnet,**
**dass** die große Oberfläche impulsartig mit dem Luft-, Dampf- und/oder Wasserstrahl beaufschlagt wird.

3. Verfahren nach Anspruch 1,
**dadurch gekennzeichnet,**
**dass** dem Luft-, Dampf-, und/oder Wasserstrahl fein- bis feinstkörnige Zuschläge, insbesondere Glasperlen, Sand od. dgl. zugefügt werden.

4. Verfahren nach Anspruch 1,
**dadurch gekennzeichnet,**
**dass** die Mineralfaserbahn mit mehreren Luft-, Dampf- und/oder Wasserstrahlen zeilenartig beaufschlagt wird.

5. Verfahren nach Anspruch 1,
**dadurch gekennzeichnet,**
**dass** die Mineralfaserbahn alternierend mit Luft- und Wasserstrahlen beaufschlagt wird.

6. Verfahren nach Anspruch 1,
**dadurch gekennzeichnet,**
**dass** in die Mineralfaserbahn durch die Dampf- und/oder Wasserstrahlen eingebrachtes Wasser zumindest teilweise entfernt, insbesondere abgesaugt wird.

7. Verfahren nach Anspruch 1,
**dadurch gekennzeichnet,**
**dass** die Oberfläche abschließend mit einer Deckschicht beschichtet wird, die vorzugsweise aus einem Gemisch aus insbesondere feingemahlenen Mineralfasern und Bindemittel besteht.

8. Verfahren nach Anspruch 7,
**dadurch gekennzeichnet,**
**dass** die Deckschicht eine druck-, biege- und querzugfeste Oberfläche bildet und vorzugsweise eine Rohdichte zwischen ca. 180 und ca. 800 kg/m³ aufweist.

9. Verfahren nach Anspruch 8,
**dadurch gekennzeichnet,**
**dass** die Deckschicht mit kömigen Zuschlägen versehen wird und eine Rohdichte zwischen ca. 250 und ca. 500 kg/m³ aufweist.

10. Verfahren nach Anspruch 7,
**dadurch gekennzeichnet,**
**dass** die Deckschicht mittels einer thermischen Behandlung verfestigt wird.

11. Verfahren nach Anspruch 10,
**dadurch gekennzeichnet,**
**dass** die thermische Behandlung der Deckschicht mittels eines Trockners, Wärmestrahlern, Mikrowellenstrahlern und/oder dgl. durchgeführt bzw. beschleunigt wird.

12. Verfahren nach Anspruch 7,
**dadurch gekennzeichnet,**
**dass** die Deckschicht in die Oberfläche eingepresst und dabei insbesondere verdichtet wird.

13. Verfahren nach Anspruch 7,
**dadurch gekennzeichnet,**
**dass** das Aufbringen der Deckschicht durch einen Unterdruck auf der gegenüberliegenden Oberfläche der Mineralfaserbahn bzw. der Lamellenplatte unterstützt wird.

14. Verfahren nach Anspruch 7,
**dadurch gekennzeichnet,**
**dass** die Deckschicht einer thermischen Behandlung zu ihrer Aushärtung auf der Oberfläche unterzogen wird.

15. Verfahren nach Anspruch 7,
**dadurch gekennzeichnet,**
**dass** die thermische Behandlung der Deckschicht mittels hochfrequenter Energiestrahlung durchgeführt wird.

16. Verfahren nach Anspruch 1,
**dadurch gekennzeichnet,**
**dass** die Mineralfaserbahn mittels Hochdruckwasserstrahlen mit einem Druck von vorzugsweise 120 bis 250 bar in einzelne Abschnitte geschnitten wird, die anschließend eine Lamelle einer Lamellenplatte oder eine Lamellenplatte bilden.

## Claims

1. Method for producing insulation panels, particularly segmental panels, from mineral fibres, preferably of rock wool, in which method a silicate melt is defibred in a defibring unit, thereafter the mineral fibres are deposited as a mineral fibre web on a conveyor device, if necessary under the addition of a binding and/or impregnating agent, said mineral fibre web is immediately subject to a forming process and finally supplied to a hardening furnace, before said mineral fibre web is divided in individual insulation panels, wherein in a further processing step loose mineral fibres are removed from at least one major surface of said mineral fibre web and/or insulation panels,
**characterized in**
**that** at least one major surface, preferably that major surface of the mineral fibre web which is to be provided with a coating, is subject to an air, steam and/or water jet applied under a steep to right angle, which jet transports loose and/or weakly bound mineral fibres and/or mineral fibres disturbed in their position arranged in the region close to the surface of said mineral fibre web to regions of said mineral fibre web which are more deeply located with respect to said major surface.

2. Method according to claim 1,
**characterized in**
**that** the large surface is subject to said air, steam and/or water jet in a pulse-like fashion.

3. Method according to claim 1,
**characterized in**
**that** said air, steam and/or water jet is added fine to finest-grained additives, particularly glass beads, sand or the like.

4. Method according to claim 1,
**characterized in**
**that** said mineral fibre web is subject to plural air, steam or water jets in a line fashion.

5. Method according to claim 1,
**characterized in**
**that** said mineral fibre web is subject to air and water jets in an alternating fashion.

6. Method according to claim 1,
**characterized in**
**that** water introduced in said mineral fibre web by said steam and/or water jets is at least partially removed, particularly drawn-off.

7. Method according to claim 1,
**characterized in**
**that** the surface is finally coated with a cover layer that preferably consists of a mixture of particularly finely ground mineral fibres and a binding agent.

8. Method according to claim 7,
**characterized in**
**that** the cover layer forms a pressure-, bending- and lateral tension-resistant surface and preferably has a bulk density of between approx 180 and approx 800 kg/m³.

9. Method according to claim 8,
**characterized in**
**that** the cover layer is provided with granular additives and has a bulk density of between approx 250 and approx 500 kg/m³.

10. Method according to claim 7,
**characterized in**
**that** the cover layer is compacted by means of a thermal treatment.

11. Method according to claim 10,
**characterized in**
**that** said thermal treatment of said cover layer is effected or accelerated by means of a dryer, heat radiation device, microwave radiation device and/or similar devices.

12. Method according to claim 7,
**characterized in**
**that** the cover layer is pressed into the surface and particularly compacted during this operation.

13. Method according to claim 7,
**characterized in**
**that** the application of said cover layer is supported by a vacuum pressure on the opposite surface of said mineral fibre web or segmental panel.

14. Method according to claim 7,
**characterized in**
**that** the cover layer is subject to a thermal treatment for its curing on the surface.

15. Method according to claim 7,
**characterized in**
**that** the thermal treatment of said cover layer is effected by means of high-frequency energy radiation.

16. Method according to claim 1,
**characterized in**
**that** said mineral fibre web is cut to individual sections by means of highpressure water jets at a pressure of preferably 120 to 250 bar, which sections thereafter form a segment of a segmental panel or a segmental panel.

## Revendications

1. Procédé pour la fabrication de panneaux isolants, en particulier de panneaux à lamelles en fibres minérales, de préférence en laine minérale, pour lequel une masse de silicate fondue est défibrée dans un dispositif de défibrage, les fibres minérales sont ensuite déposées, le cas échéant en ajoutant un liant et/ou un agent d'imprégnation, sur un dispositif de transport comme lé de fibres minérales, le lé de fibres minérales est ensuite traité pour lui donner une conformation et amené finalement à un four de trempe avant que le lé de fibres minérales soit divisé en panneaux isolants individuels, cependant que dans une autre étape de travail des fibres minérales détachées sont enlevées d'au moins une grande surface du lé de fibres minérales et/ou des panneaux isolants,
**caractérisé en ce**
**qu'**au moins une grande surface, de préférence la grande surface du lé de fibres minérales qui doit être revêtue d'un revêtement est chargée, en formant un angle obtus à droit, d'un jet d'air, de vapeur et/ou d'eau qui transporte des fibres minérales détachées placées dans la zone proche de la surface du lé de fibres minérales et/ou faiblement liées et/ou dont la position a été dérangée dans des zones du lé de fibres minérales qui sont situées plus basses que la grande surface.

2. Procédé selon la revendication 1,
**caractérisé en ce**
**que** la grande surface est chargée par impulsions d'un jet d'air, de vapeur et/ou d'eau.

3. Procédé selon la revendication 1,
**caractérisé en ce**
des agrégats à grains fins à très fins, en particulier des perles de verre, du sable ou équivalent, sont ajoutés au jet d'air, de vapeur et/ou d'eau.

4. Procédé selon la revendication 1,
**caractérisé en ce**
**que** le lé de fibres minérales est chargé par lignes de plusieurs jets d'air, de vapeur et/ou d'eau.

5. Procédé selon la revendication 1,
**caractérisé en ce**
**que** le lé de fibres minérales est chargé en alternance de jets d'air et d'eau.

6. Procédé selon la revendication 1,
**caractérisé en ce**
**que** de l'eau amenée dans le lé de fibres minérales par les jets de vapeur et/ou d'eau est au moins partiellement enlevée, en particulier aspirée.

7. Procédé selon la revendication 1,
**caractérisé en ce**
**que** la surface est revêtue finalement avec une couche de couverture qui est constituée de préférence par un mélange de fibres minérales finement moulues et de liant.

8. Procédé selon la revendication 7,
**caractérisé en ce**
**que** la couche de couverture forme une surface résistante à la pression, à la flexion et à la traction transversale et présente de préférence une masse volumique apparente entre env. 180 et env. 800 kg/m³.

9. Procédé selon la revendication 8,
**caractérisé en ce**
**que** la couche de couverture est pourvue d'agrégats à grains et présente une masse volumique apparente entre env. 250 et env. 500 kg/m³.

10. Procédé selon la revendication 7,
**caractérisé en ce**
**que** la couche de couverture est consolidée par un traitement thermique.

11. Procédé selon la revendication 10,
**caractérisé en ce**
**que** le traitement thermique de la couche de couverture est effectué ou accéléré au moyen d'un séchoir, de radiateurs thermiques, de radiateurs à micro-ondes et/ou équivalent.

12. Procédé selon la revendication 7,
**caractérisé en ce**
**que** la couche de couverture est enfoncée dans la surface en étant, en particulier, compactée.

13. Procédé selon la revendication 7,
**caractérisé en ce**
**que** l'application de la couche de couverture est supportée par une dépression sur la surface opposée du lé de fibres minérales ou du panneau à lamelles.

14. Procédé selon la revendication 7,
**caractérisé en ce**
**que** la couche de couverture est soumise à un traitement thermique pour son durcissement sur sa surface.

15. Procédé selon la revendication 7,
**caractérisé en ce**
**que** le traitement thermique de la couche de couverture est effectué par un rayonnement d'énergie haute fréquence.

16. Procédé selon la revendication 1,
**caractérisé en ce**
**que** le lé de fibres minérales est coupé au moyen de jets d'eau haute pression avec une pression de préférence de 120 à 250 bar en sections individuelles qui forment ensuite une lamelle d'un panneau à lamelles ou un panneau à lamelles.
